Europäisches Patentamt

European Patent Office

Office européen des brevets

(11) Publication number: **0 148 553**
**B1**

(12) **EUROPEAN PATENT SPECIFICATION**

(45) Date of publication of patent specification: **04.07.90**

(51) Int. Cl.⁵: **G 11 B 33/02**

(21) Application number: **84305295.2**

(22) Date of filing: **03.08.84**

(54) **Optical disc players.**

(30) Priority: **12.01.84 JP 2695/84**

(43) Date of publication of application:
**17.07.85 Bulletin 85/29**

(45) Publication of the grant of the patent:
**04.07.90 Bulletin 90/27**

(84) Designated Contracting States:
**AT**

(56) References cited:
**DE-A-2 610 462**
**DE-A-3 120 425**
**DE-B-1 797 242**
**DE-B-2 131 264**
**DE-B-2 909 564**

(73) Proprietor: **SONY CORPORATION**
**7-35 Kitashinagawa 6-Chome Shinagawa-ku**
**Tokyo 141 (JP)**

(72) Inventor: **Fujiie, Kazuhiko c/o Patents Division**
**Sony Corporation 7-35 Kitashinagawa-6**
**Shinagawa-ku Tokyo (JP)**

(74) Representative: **Thomas, Christopher Hugo**
**et al**
**D Young & Co 10 Staple Inn**
**London WC1V 7RD (GB)**

Courier Press, Leamington Spa, England.

## Description

This invention relates to optical disc players for reading information such as stereophonic audio signals from a disc using an optical pick-up.

Among optical disc players, there is a type wherein a disc is drawn into the optical disc player and is loaded on a disc table by means of a loading mechanism (see Japanese utility model application 57/130852).

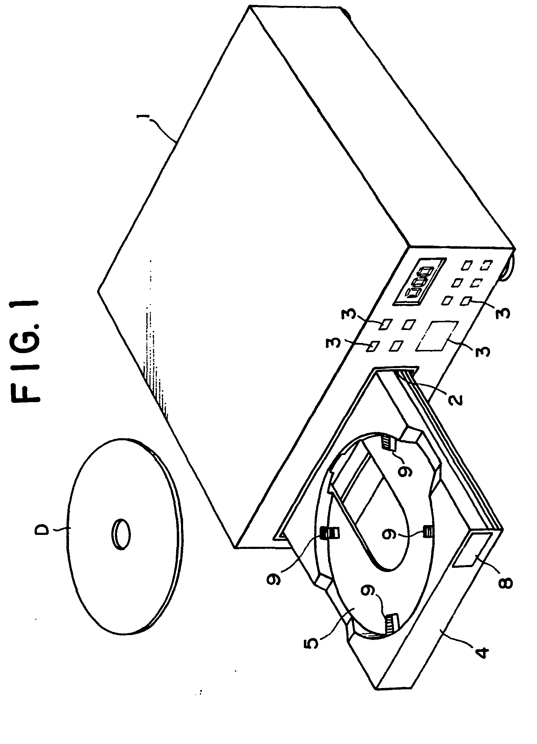

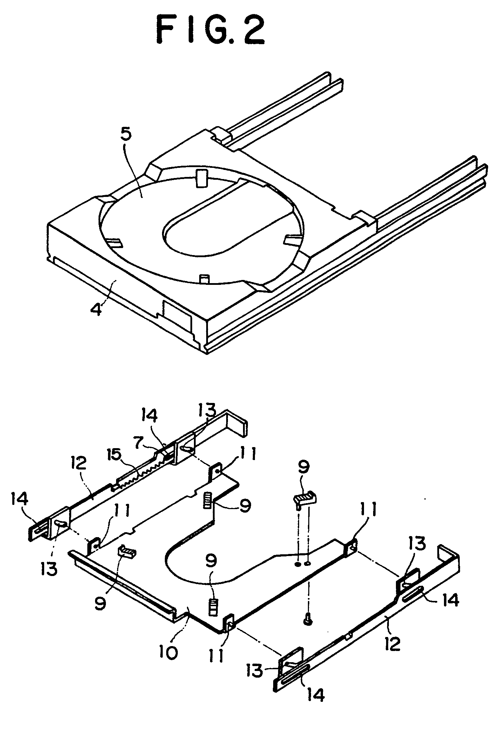

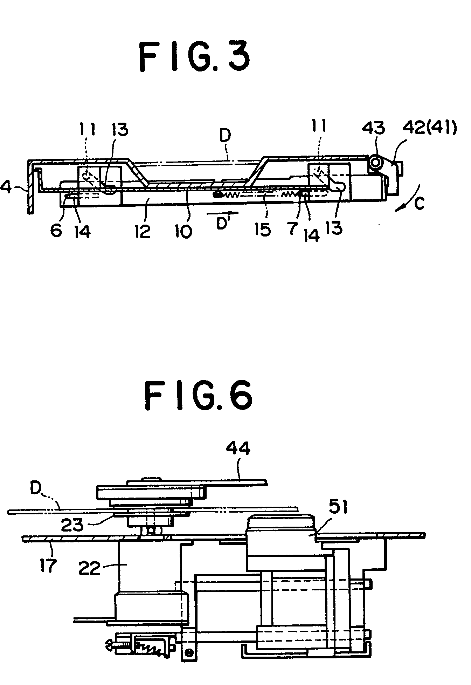

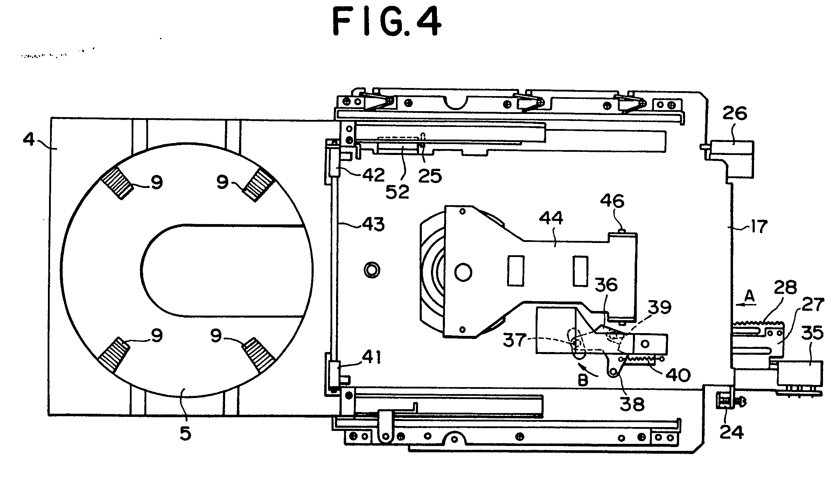

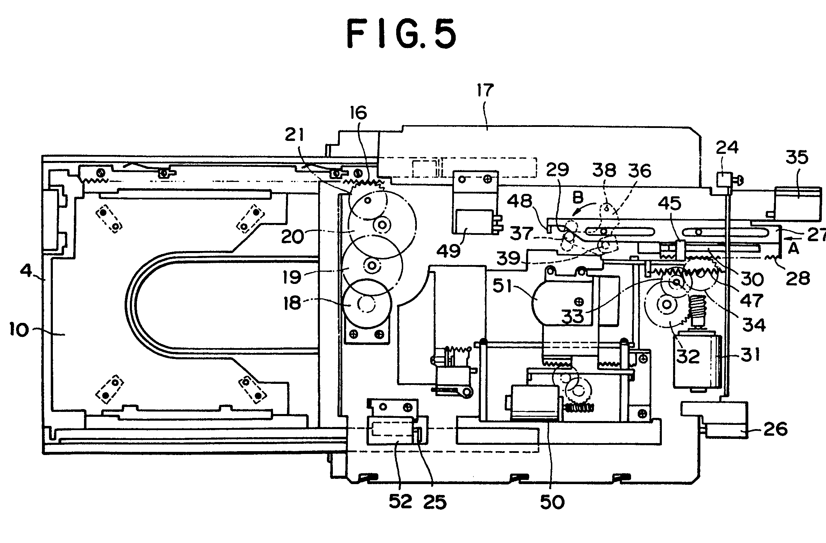

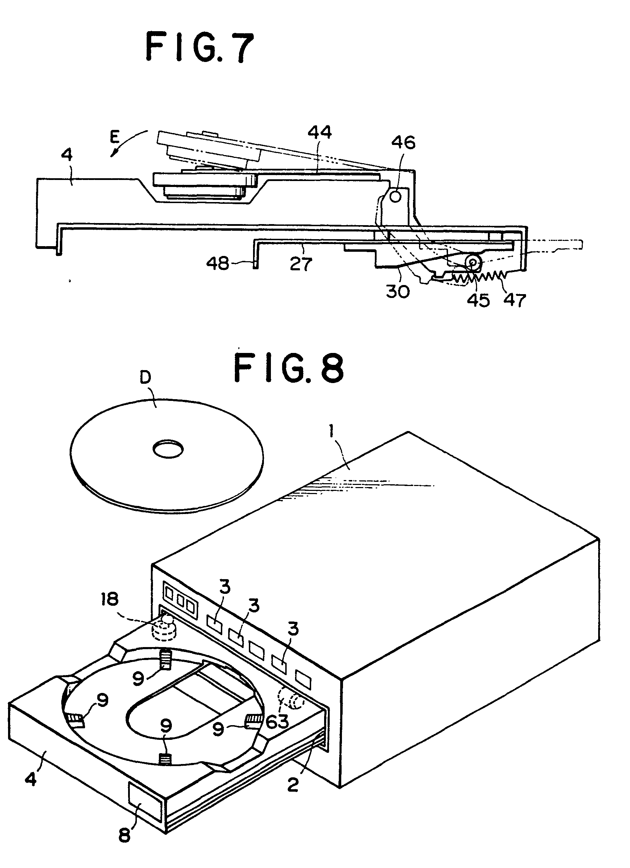

Figures 1 to 7 of the accompanying drawings illustrate the general construction of such a previously proposed optical disc player. The optical disc player, as shown in Figure 1, has a disc carrying member including several parts as shown in the fragmentary view shown in Figure 2 which are assembled as shown in the sectional view shown in Figure 3. A loading mechanism and associated components are provided on an upper face and a rear face of a support member and have a construction as shown in Figures 4 and 5, while a clamp mechanism for clamping a disc loaded on a disc table has a construction as shown in Figures 6 and 7.

Operations of such an optical disc player will be described in more detail below.

At first, in an unloading position in which a disc carrying member 4 is drawn out from an opening 2 of an outer casing 1 as shown in Figure 1, a disc D is put onto disc receiving members 9 projecting upwardly through from a bottom face of an annular recess 5 of the disc carrying member 4, and then if a loading/unloading switch 8 is depressed, a first motor 18 which is meshed with a rack 16 (Figure 5) on the disc carrying member 4 via gear wheels 19, 20 and 21 is rotated in a forward direction thus to move the disc carrying member 4 into the outer casing 1. When the disc carrying member 4 is moved to a position at which a disc D can be loaded onto a disc table 23 (Figure 6) mounted on a spindle motor 22, the disc carrying member 4 is abutted against a stop portion 24 (Figures 4 and 5) and a pressing portion 25 presses against a first limit switch 26 so that a second motor 31 which is meshed with a rack 28 on an operating lever 27 via gear wheels 32, 33 and 34 is rotated in a forward direction to move the operating lever 27 in the direction of an arrow A. It is to be noted that, while movement of the operating lever 27 will operate a change-over switch 35 for changing over the rotational directions of the first and second motors 18 and 31, the first and second motors 18 and 31 will rotate in the respective forward directions until a loading operation is completed.

As the operating lever 27 is moved in the direction of the arrow A as described above, cam surfaces 29 and 30 provided on the operating lever 27 will cause a loading operation of the disc onto the disc table 23 and a clamping operation of the disc D in a sequential relationship.

Loading of the disc D onto the disc table 23 is caused by the first cam surface 29 which contacts with and presses against a sliding contact pin 37 on a pivotal operating lever 36 thus to pivot the pivotal operating lever 36 in the direction of an arrow B around a pivot 39 against the urging of a spring 40. At this instant, since the disc carrying member 4 has been drawn into the outer casing 1 as described above and a lever pressing member 41 (Figure 3) of the disc carrying member 4 is in abutment against a pressing pin 38, the lever pressing member 41 is pressed by the pressing pin 38 to rotate in the direction of an arrow C around a pivot 43, so that the lever pressing member 41 and a lever pressing member 42 push slide cam levers 12 in a direction opposite to the direction indicated by an arrow D'. Since a disc support plate 10 on which the disc receiving members 9 are mounted to project through from the bottom face of the annular recess 5 of the disc carrying member 4 as shown in Figure 1 are supported in inclined cam holes 13 in the side cam levers 12 by means of pins 11 as shown in Figure 2, while the slide cam levers 12 are supported, at elongated holes 14 formed therein, by support pins 6 and 7, respectively, of the disc carrying member 4 and are urged in the direction of the arrow D' by a spring 15 (Figure 3) which extends between the support pin 7 and one of the slide cam levers 12, the slide cam levers 12 are moved in the direction opposite to the arrow D' direction against the urging of the spring 15 so that the disc support plate 10 is moved down under the guidance of the cam holes 13 thus to load the disc D onto the disc table 12 as shown in Figure 6.

On the other hand, clamping of the disc D to the disc table 23 is caused by the second cam surface 30 which pivots a pressure contact roller 45, which is mounted on a clamper arm 44 and is abutted on the second cam surface 30 as shown in Figure 7 by an urging force of a spring 47, in the direction of an arrow E as the operating lever 27 moves. By this pivotal motion of the pressure contact roller 45, the clamper arm 44 is pivoted in the arrow E direction around a shaft 46 to a position in which the disc D is clamped onto the disc table 23 as shown in Figure 6.

After such operations have been carried out in sequential relationship by the movement of the operating lever 27 in the arrow A direction, when a pressing portion 48 (Figure 5) of the operating lever 27 presses against a second limit switch 49, the first and second motors 18 and 31 are stopped, thereby completing the loading operation.

Thereafter, an operating switch 3 (Figure I) may be operated to initiate rotation of the spindle motor 22 and a pick-up motor 50 to reproduce recorded signals on the disc D by means of an optical pick-up 51 (Figure 6).

On the contrary, an unloading operation may be initiated by a second operation of the loading/unloading switch 8 in the loaded condition described above. Upon such second operation, the mechanisms will operate oppositely to the manner described above until the stop portion 24 of the disc carrying member 4 presses against a third limit switch 52 (Figure 4) to stop the first motor 18 in the unloading condition of Figure 1. It is to be noted that the mechanisms which operate as described above are located on a support member 18 which is in turn mounted on the outer casing 1.

Thus, in this optical disc player, the loading mechanism, a disc rotating mechanism, the optical pick-up 51, and so on, are located on the support member 17 mounted on the outer casing 1. Accordingly, since the optical pick-up 51 and other mechanisms are located in this way on the support member 17, that is, on the outer casing 1, the reproducing mechanism of the optical disc player will be directly subjected to vibrations from outside, and particularly in a portable type or a car-carried type which is vibrated violently, it is difficult to maintain good reproduction.

Moreover, although it is expected that a servo gain such as focus servo, tracking servo, and so on, will increase in order to deal with vibrations, particularly if a servo gain is increased in tracking servo, a so-called track jump from a reading track to another adjacent track may be caused by an influence of a defect (a scar, pin-hole or the like) on a disc D, and the recorded signal is as a result only intermittently reproduced.

Thus, in order mechanically to improve a vibration damping property of an optical disc player, the support member 17 is mounted on a main support member, which is integral with an outer casing 1, via a vibration absorbing mechanism such as, for example, a coil spring.

In this case, it is desirable that the coil spring forming a vibration absorbing mechanism is made moderate to reduce a resonance frequency fO as low as possible within an allowable range, but if the resonance frequency fO is reduced by employing the vibration absorbing mechanism, the support member 17 will also vibrate during loading or unloading of the disc D out of phase with vibration of the outer casing when the outer casing vibrates. As a result, there is the possibility that, during loading or unloading, the disc carrying member 4 collides with the opening 2 of the outer casing 1, since the support member 17 has a loading mechanism for the disc D as described above, and hence it is necessary to form the opening 2 larger than the disc carrying member 4. However, if the opening 2 is made large in this way, then this will cause a problem that the opening 2 is not completely shut by the disc carrying member 4 when in the position fully drawn in the outer casing 1, leaving a gap between the opening 2 and the disc carrying member 4, which is not desirable for the design of the machine.

Meanwhile, if only a loading mechanism is provided on a main support member, another problem will be caused that a relative dislocation between the loading mechanism and a disc table 23 may be caused due to vibrations from outside during loading, so that a disc D cannot be loaded in position on the disc table 23 and in the worst cases, the disc D may be damaged by a clamp mechanism and so on.

Furthermore, where the support member 17 is mounted on a main support member via a vibration absorbing mechanism, another problem may be caused that the support member 17 is caused to vibrate violently due to reactive action by an influence of acceleration upon relative movement between the disc D and an optical pick-up 51 for reading the disc D. Accordingly, even after the optical pick-up 51 reaches an object track position of the disc D, track jump may be caused by vibrations, thereby making an accessing operation unstable and prolonging the time required for such accessing.

According to the present invention there is provided an optical disc player comprising:

a support member on which an optical pick-up and a disc rotating mechanism are located; and

a main support member on which said support member is mounted via a vibration absorbing mechanism; characterized by:

a lock mechanism for preventing movement of said support member relative to said main support member, whereby said support member is fixed to said main support member by means of said lock mechanism during a loading or unloading operation of a disc onto or from a disc table forming said disc rotating mechanism or during relative movement of said optical pick-up to the disc loaded on said disc table for accessing of the disc.

The invention will now be described by way of example with reference to the accompanying drawings, throughout which like parts are referred to by like references, and in which:

Figures 1 to 7 illustrate a previously proposed disc player, and Figure 1 is a perspective view of the entire device;

Figure 2 is a fragmentary perspective view of a disc carrying member;

Figure 3 is a cross sectional view of the disc carrying member of Figure 2;

Figure 4 is a plan view of a support member;

Figure 5 is a back elevational view of the support member of Figure 4;

Figure 6 is a side elevational view of an optical pick-up section;

Figure 7 is a side elevational view of a clamper section;

Figure 8 is a perspective view showing an embodiment of optical disc player according to the present invention;

Figure 9 is an illustrative sectional view showing a loading mechanism;

Figure 10 is a diagrammatic view showing an example of a lock to said main support member, whereby said support member is fixed to said main support member by means of said lock mechanism during a loading or unloading operation of a disc onto or from a disc table forming said disc rotating mechanism or during relative movement of said optical pick-up to the disc loaded on said disc table for accessing of the disc.

Thus an embodiment of optical disc player according to the present invention may comprise a lock mechanism for preventing a support member mounted on a main support member via a vibration absorbing mechanism from moving relative to the main support member, whereby the support member is fixed to the main support member by means of the lock mechanism during a loading or unloading operation of a disc onto or from a disc table forming the disc rotating mechanism or during relative movement of an optical pickup to the disc loaded on the disc table for reading the disc. Accordingly, the optical disc player is improved in its vibration damping performance so that a loading or unloading operation of a disc onto or from a disc table and an accessing operation between an optical pick-up and a disc can be effected in a stabilized condition.

The invention will now be described by way of example with reference to the accompaning drawings, throughout which like parts are referred to by like references, and in which:

Figures 1 to 7 illustrate a previously proposed disc player, and Figure 1 is a perspective view of the entire device;

Figure 2 is a fragmentary perspective view of a disc carrying member;

Figure 3 is a cross sectional view of the disc carrying member of Figure 2;

Figure 4 is a plan view of a support member;

Figure 5 is a back elevational view of the support member of Figure 4;

Figure 6 is a side elevational view of an optical pick-up section;

Figure 7 is a side elevational view of a clamper section;

Figure 8 is a perspective view showing an embodiment of optical disc player according to the present invention;

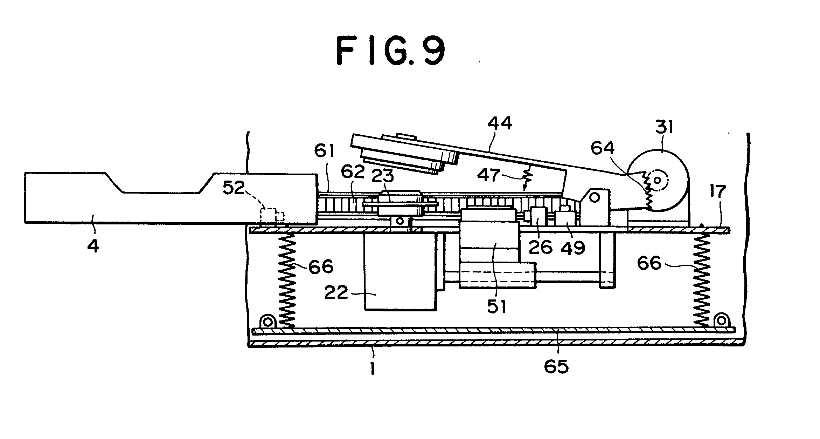

Figure 9 is an illustrative sectional view showing a loading mechanism;

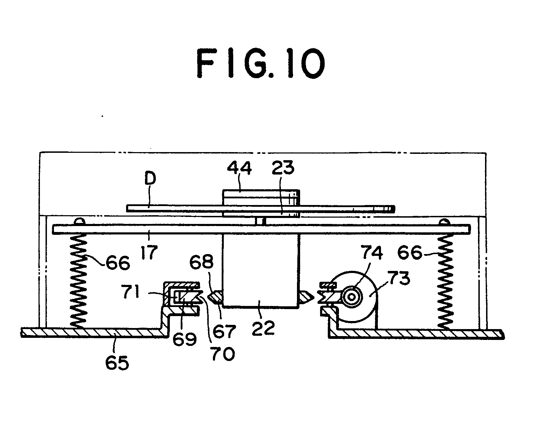

Figure 10 is a diagrammatic view showing an example of a lock mechanism;

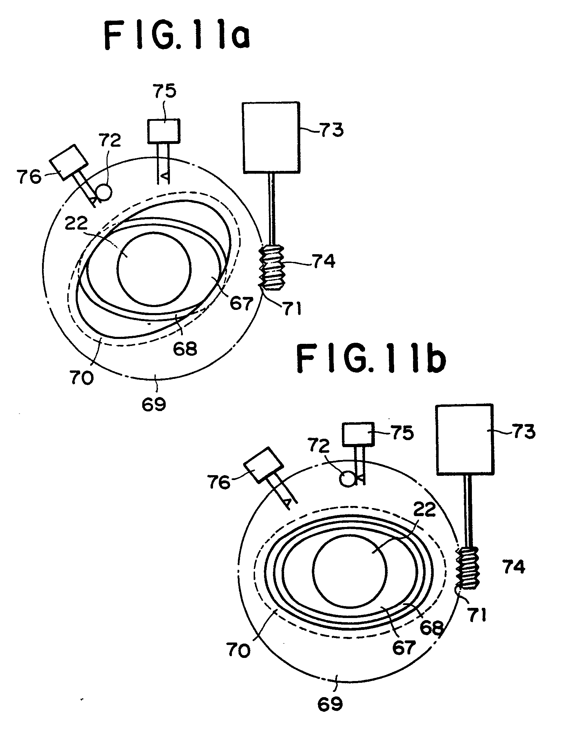

Figures 11a and 11b are diagrammatic plan views illustrating operations of the lock mechanism of Figure 10;

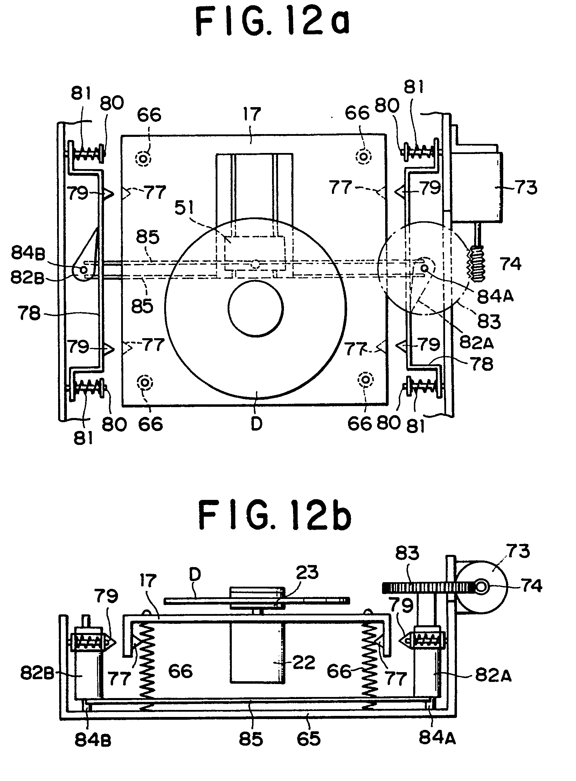

Figures 12a and 12b are a plan view and a front elevational view, respectively, showing another example of lock mechanism; and

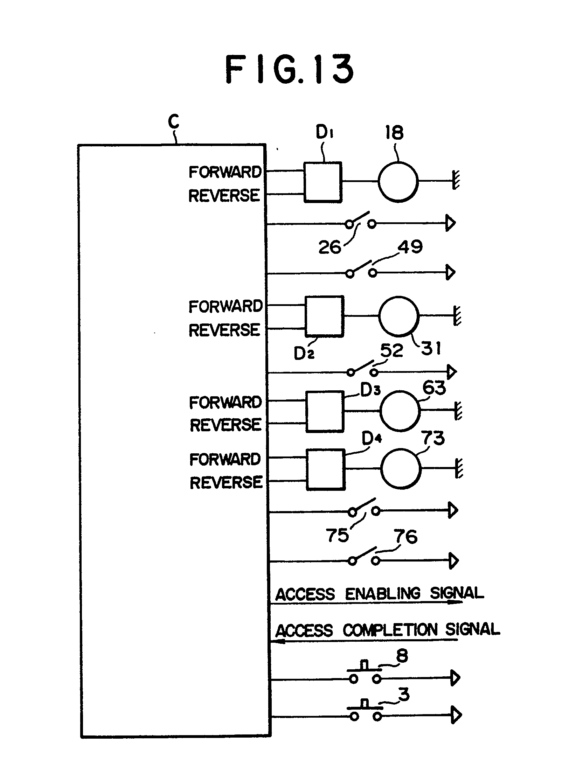

Figure 13 is a diagrammatic representation showing an example of control section.

Referring to Figures 8 and 9, guide rails 61 are provided on side plates of an outer casing 1 for guiding a disc carrying member 4 and each have a rack 62 provided thereon. A first motor 18 mounted on the disc carrying member 4 shown in Figure 8 is meshed with one of the racks 62 of Figure 9 via a gear wheel.

A third motor 63 is provided for driving a pinion, which is not shown in the drawings but is provided on an outer periphery of the lever pressing member 41 of Figure 4, to pivot the lever pressing member 41.

A gear wheel 64 is provided on a clamper arm 44 and is meshed with a gear wheel of a second motor 31.

A main support member 65 is mounted on the outer casing 1, and the support member 17 is mounted for rocking motion relative to the main support member 65 via coil springs 66 connected to four corners thereof.

It is to be noted that a rotational driving mechanism, the clamping mechanism and an optical pick-up 51 are located on the support member 17 while the loading mechanism is located on the main support member 65.

In an unloading condition of Figure 8, if a loading/unloading switch 8 is depressed, then the first motor 18 is rotated in a forward direction to draw the disc carrying member 4 into the outer casing 1 under the guidance of the racks 62. When the disc carrying member 4 is moved to a position in which a disc D can be loaded onto a disc table 23, the disc carrying member 4 is abutted against a stop portion 24 (not shown) and presses against a first limit switch 26 to cause the second and third motors 31 and 63 to be rotated in respective forward directions to effect loading and clamping operations of the disc D onto the disc table 23. Simultaneously with completion of such loading and clamping operations of the disc D, the clamper arm 44 presses against a second limit switch 49 to stop the first, second and third motors 18, 31 and 63, thereby completing the loading operation.

Meanwhile, if the loading/unloading switch 8 is depressed in the loading condition as described above, the second and third motors 31 and 63 are rotated in the respective reverse directions to effect unloading and unclamping operations of the disc D from the disc table 23, and then after lapse of a predetermined period of time, the second and third motors 31 and 63 are stopped. Then the first motor 18 is rotated in the reverse direction to move the disc carrying member 4 out of the casing 1, and when a third limit switch 52 is pressed, the first motor 18 is stopped thus to restore the unloading condition as shown in Figure 8.

Figure 10 is a diagrammatic representation showing an example of a lock mechanism for fixing the support member 17 of the optical disc player of Figures 8 and 9 at a particuiar point in time and Figures 11a and 11b are plan views which illustrate operations of the lock mechanism of Figure 10.

In Figures 10, 11a and 11b, like reference numerals designate like parts or components to those of Figures 1 to 9, and a loading mechanism is shown in two dots and dash lines in Figure 10.

In Figures 10, 11a and 11b, a cam 67 is mounted on a spindle motor 22 and has a projecting portion 68 formed on an outer periphery thereof. A lock ring 69 is mounted for pivotal motion on the main support member 65 in an opposing relationship with the projecting portion 68 of the cam 67. The lock ring 69 has a V-shaped groove 70 formed in an inner periphery thereof for engagement with the projecting portion 68 of the cam 67 and also has a gear wheel 71 provided on an outer periphery thereof. The lock ring 69 further has a pressing portion 72 provided on a flat face portion thereof. A fourth motor 73 is mounted on the main support member 65 and has a worm wheel 74 mounted thereon which is in mesh with the gear wheel 71 of the lock ring 69. Fourth and fifth switches 75 and 76 are also provided for stopping the fourth motor 73.

Figure 11a shows a condition in which the projecting portion 68 of the cam 67 is engaged in the V-shaped groove 70 of the lock ring 69 thus to fix the spindle motor 22 and hence the support member 17 relative to the main support member 65. In this fixed condition, if the fourth motor 73 is rotated in the forward direction to rotate the lock ring 69 in a clockwise direction, the lock ring 69 is disengaged from the cam 67 into an unfixed condition as shown in Figure 11b. Thus, when the pressing portion 72 presses against the fourth limit switch 75, the fourth motor 73 is stopped and the support member 17 is now supported on the main support member 65 only by means of the coil springs 66. Meanwhile, if the fourth motor 73 is rotated in the reverse direction from the unfixed condition of Figure 11b to rotate the lock ring 69 in the counter-clockwise direction, then the cam 67 and the lock ring 69 are engaged with each other into the fixed condition of Figure 11a. When the pressing portion 72 presses against the fifth switch 76, the fourth motor 73 is stopped thus to fix the support member 17 to the main support member 65.

The lock mechanism as described above operates as follows.

As has been described in connection with Figures 8 and 9, the fixed condition of Figure 11a is maintained during a loading operation. But if the clamper arm 44 at first presses against the second limit switch 49 to stop the first and second motors 18 and 31, then the fourth motor 73 is rotated in the forward direction thus to bring the lock ring 69 into the unfixed condition of Figure 11b. Then, an operating switch 3 (Figure 8) will be depressed to render a reproduction mechanism operative. At this instant, the coil springs 66 absorb vibrations from outside.

In the meantime, when an unloading operation is to be started, the fourth motor 73 and the lock ring 69 are operated oppositely to that described above thus to fix the support member 17 to the main support member 65, whereafter an unloading operation is effected. Accordingly, vibrations of the support member 17 are the same as vibrations of the outer casing 1 during loading and unloading operations.

Meanwhile, if the operating switch 3 is depressed during a reproducing operation in order to input a jump command into the optical pick-up 51 to effect an accessing operation, then the mechanisms operate such that the support member 17 may be fixed by a control section to effect the accessing operation as hereinafter described and simultaneously with completion of the accessing operation, fixing of the support member 17 may be released.

As described above, since the optical disc player is constructed to fix the support member 17 to the main support member 65 by means of the lock mechanism to prevent relative movement between them during relative movement of the optical pick-up 51 to the disc D to effect an accessing operation, loading and unloading operations of the disc D and an accessing operation can be performed in a stabilized condition and vibrations from outside during reproduction are absorbed by the coil springs 66, thus improving the vibration damping performance of the machine. In addition, since the loading mechanism is provided on the main support member 65, an opening 2 of the outer casing 1 can be formed to be substantially the same size as the disc carrying member 4, thereby eliminating a design defect.

Figures 12a and 12b are a plan view and a front elevational view, respectively, showing another example of lock mechanism, and like reference numerals designate like parts or components to those of Figures 1 to 11.

In Figures 12a and 12b, two pairs of conical recesses 77 are formed in opposite side faces of the support member 17. A travelling plate 78 is supported for movement on rods 80 provided on the main support member 65 and has conical projections 79 provided therein in opposing relationship to the conical recesses 77 of the support member 17. The travelling plate 78 is urged in a direction away from the support member 17. A pair of cams 82A and 82B are supported for pivotal motion on shafts 84A and 84B, respectively, provided on the main support member 65, and are connected to each other by means of a pair of connecting rods 85. The cam 82A has a worm wheel 83 formed integrally thereon which is in mesh with the worm wheel 74.

In this example, if the fourth motor 73 is rotated in the reverse direction, then the cams 82A and 82B are rotated in the clockwise direction via the worm wheel 83 and the connecting rod 85 to move the travelling plate 78 against the urging of a spring 81 until the projections 79 are engaged in the recesses 77 thus to fix the support member 17 to the main support member 65. Meanwhile, if the fourth motor 73 is rotated in the forward direction from the fixed condition of the support member 17, then the pertaining mechanisms operate oppositely to that described above. And the travelling plate 78 is moved away from the support member 17 by the urging force of the springs 81 to disengage the projections 79 from the recesses of the support member 17, thereby bringing the support member 17 into the unfixed condition of Figure 12 in which the support member 17 is supported on the main support member 65 only by means of the coil springs 66. Accordingly, similar effects to those of the preceding example can be attained.

It is to be noted that means for stopping the fourth motor 73 may be a limit switch for detecting a position as in the preceding example.

Figure 13 is a diagrammatic representation showing an example of control section.

Referring to Figure 13, a control section C is formed by a microcomputer, and motor driving circuits D1, D2, D3 and D4 for rotating the first, second, third and fourth motors 18, 31, 63 and 73, respectively, are connected to the control section C.

Operations of the control section C will now be described in detail.

At first, if the loading/unloading switch 8 is depressed in the unloading condition in which the disc carrying member 4 is projecting from the outer casing 1 as shown in Figure 8, the control section C drives the first motor 18 for loading to rotate in the forward direction via the motor driving circuit D1, thereby to effect a loading operation. Then, when the loading operation in the horizontal direction is completed and the first limit switch 26 for loading is pressed, the control section C drives the second motor 31 for clamping, and the third motor 63 for loading a disc to rotate in the respective forward directions via the motor driving circuits D2 and D3, respectively, thereby to effect loading and clamping operations of a disc onto a disc table. Then, after completion of the loading and clamping operations of the disc onto the disc table, when the second limit switch 49 for loading is pressed by the clamper arm, the control section C stops the first, second and third motors 18, 31 and 63 while it rotates the fourth motor 73 for locking via the motor driving circuit D4 thereby to release the fixed condition of the support member by the main support member. Then, after completion of such releasing of the support member, when the fourth limit switch 75 for locking is pressed, the control section C stops the fourth motor 73. In this condition, a normal reproducing operation can be performed. Meanwhile, if the operating switch 3 for accessing is depressed for an accessing operation in the unfixed condition of the support member as described above, the control section C drives the fourth motor 73 to rotate in the reverse direction thereby to effect a fixing operation of the support member 17. Then, after completion of the fixing operation of the support member 17, when the fifth limit switch 76 for locking is depressed, the control section C stops the fourth motor 73 and supplies an access enabling signal for allowing an accessing operation. In response to this signal thus supplied, an accessing operation will be initiated. After then, when an access completing signal representing that the accessing operation has been completed is received, the control section C drives the fourth motor 73 to rotate in the forward direction thereby to effect releasing of the fixed condition of the support member, and then when the fourth limit switch 75 is pressed, the control section C stops the fourth motor 73.

Further, if the loading/unloading switch 8 is depressed for unloading, the control section C drives the fourth motor 73 to rotate in the reverse direction thereby to effect a fixing operation of the support member. Then when the fifth limit switch 76 is depressed after completion of the fixing operation of the support member, the control section C stops the fourth motor 73 while it drives the second and third motors 31 and 63 to rotate in the respective reverse directions thereby to effect unloading and unclamping operations of a disc from the disc table. Then, after lapse of a predetermined period of time, the control section C stops the second and third motors 31 and 63. Subsequently, the control section C drives the first motor 18 to rotate in the reverse direction to move the disc carrying member 4 to a position projecting out of the outer casing 1. After then, if the third limit switch 52 for unloading is depressed, then the control section C stops the first motor 18, thereby restoring the condition of Figure 8.

It is to be noted that the vibration absorbing mechanism of the embodiments may be formed not only from coil springs 66 but from means employing viscous fluid, viscous elastic substance, magnets or the like, and a plunger or the like may be employed instead of the fourth motor 73 for driving the lock mechanism. Moreover, in order to stop the second and third motors 31 and 63, a limit switch for detecting a position may be employed instead of timing control. In addition, while the embodiments are constructed such that the disc carrying member 4 is moved in horizontal directions by the first motor 18, the present invention can be applied to an optical disc player of the type wherein a disc carrying member is moved in horizontal directions by a manual operation.

As apparent from the foregoing description, an optical disc player according to the present invention comprises a lock mechanism for preventing a support member mounted on a main support member via a vibration absorbing mechanism from moving relative to the main support member, whereby the support member is fixed to the main support member by means of the lock mechanism during a loading or unloading operation of a disc onto or from a disc table or during relative movement of an optical pick-up to a disc loaded for accessing to the disc. Thus, the optical disc player is improved in its vibration damping performance so that a loading or unloading operation of a disc onto or from a disc table, and an accessing operation between an optical pick-up and a disc can be effected in a stabilized condition. Accordingly, embodiments of the present invention can provide an optical disc player suitable for portable use or of the car-mounted type.

## Claims

1. An optical disc player comprising:
    a support member (17) on which an optical pick-up (51) and a disc rotating mechanism (23) are located; and
    a main support member (65) on which said support member (17) is mounted via a vibration absorbing mechanism (66); characterized by:
    a lock mechanism (68, 70; 77, 79) for preventing movement of said support member (17) relative to said main support member (65), whereby said support member (17) is fixed to said main support member (65) by means of said lock mechanism (68, 70; 77, 79) during a loading or unloading operation of a disc (D) onto or from a disc table (23) forming said disc rotating mechanism (23) or during relative movement of said optical pick-up (51) to the disc (D) loaded on said disc table (23) for accessing of the disc (D).

2. An optical disc player according to claim 1 wherein the disc (D) is moved to a position in which the disc (D) is engaged with said disc table (23) by means of a disc carrying member (4).

3. An optical disc player according to claim 2 wherein said disc carrying member (4) is mounted on said main support member (65) without any effective vibration absorbing means interposed therebetween.

4. An optical disc player according to claim 2 or claim 3 wherein said disc carrying member (4) has an electromagnetic drive means (18, 63) which carries the disc (D) between a front opening of an outer casing of the disc player and a position above said disc table (23) in a horizontal direction and between said position and said disc table (23) in a vertical direction.

5. An optical disc player according to any one of the preceding claims wherein said lock mechanism (68, 70; 77, 79) is brought into a locking condition by means of an electromagnetic means (73) which is operated in response to a signal representative of loading or unloading of the disc (D) or accessing of the disc (D).

6. An optical disc player according to any of the preceding claims constructed for use in a car.

## Revendications

1. Tourne-disque optique comprenant:

une pièce de support (17) sur laquelle sont disposés un lecteur optique (51) et un mécanisme (23) de rotation de disque; et

une pièce de support principale (65), sur laquelle la pièce de support (17) est montée avec interposition d'un mécanisme (66) d'absorption de vibrations; caractérisé par:

un mécanisme de blocage (68, 70; 77, 79) pour empêcher le mouvement de la pièce de support (17) par rapport à la pièce de support principale (65), la pièce de support (17) étant fixée à la pièce de support principale (65) au moyen du mécanisme de blocage (68, 70; 77, 79) pendant une opération de chargement ou de déchargement d'un disque (D) sur ou à partir d'une platine (23) formant le mécanisme (23) de rotation de disque (23), ou pendant un mouvement relatif du lecteur optique (51) par rapport au disque (D), chargé sur la platine (23), en vue de l'accès au disque (D).

2. Tourne-disque optique selon la revendication 1, dans lequel le disque (D) est amené à une position dans laquelle le disque (D) est en contact avec la platine (23) au moyen d'un organe de transport de disque (4).

3. Tourne-disque optique selon la revendication 2, dans lequel l'organe de transport de disque (4) est monté sur la pièce de support principale (65) sans aucun moyen d'absorption effective de vibrations interposé entre eux.

4. Tourne-disque optique selon la revendication 2 ou 3, dans lequel l'organe de transport de disque (4) possède un moyen de commande électromagnétique (18, 63) qui transporte le disque (D) en direction horizontale entre une ouverture frontale d'un boîtier extérieur du tourne-disque et une position au-dessus de la platine (23) et en direction verticale entre cette position et la platine (23).

5. Tourne-disque optique selon l'une quelconque des revendications précédentes, dans lequel le mécanisme de blocage (68, 70; 77, 79) est amené à l'état de blocage par un moyen électromagnétique (73) qui est actionné en réponse à un signal représentatif du chargement ou du déchargement du disque (D) ou de l'accès au disque (D).

6. Tourne-disque optique selon l'une quelconque des revendications précédentes, construit pour être utilisé dans une voiture.

## Patentansprüche

1. Optischer Plattenspieler, der enthält:

einen Tragteil (17), auf dem eine optische Ableseeinrichtung (51) und eine Plattendreheinrichtung (23) angeordnet sind; und

einen Haupttragteil (65), auf dem der Tragteil (17) über eine Vibrationsabsorptionseinrichtung (66) befestigt ist; gekennzeichnet durch:

eine Verriegelungseinrichtung (68 70; 77, 79), um eine Bewegung des Tragteils (17) relativ zum Haupttragteil (65) während eines Lade- oder Entladevorgangs einer Platte (D) auf oder von einem Plattenteller (23), der die Plattendreheinrichtung (23) bildet, oder während einer Relativbewegung der optischen Ableseeinrichtung (51) zur Platte (D), die auf den Plattenteller (23) geladen ist, um zur Platte (D) zuzugreifen, zu verhindern, wobei der Tragteil (17) am Haupttragteil (65) mit Hilfe der Verriegelungseinrichtung (68, 70; 77, 79) fixiert ist.

2. Optischer Plattenspieler gemäß Anspruch 1, wobei die Platte (D) mit einem Plattenhalteteil (4) in eine Stellung bewegt wird, in der die Platte (D) mit dem Plattenteller (23) in Eingriff steht.

3. Optischer Plattenspieler gemäß Anspruch 2, wobei der Plattenhalteteil (4) auf dem Haupttragteil (65) befestigt wird, ohne daß irgendwelche wirkungsvolle Vibrationsabsorptionseinrichtungen dazwischen angeordnet sind.

4. Optischer Plattenspieler gemäß Anspruch 2 oder 3, wobei der Plattenhalteteil (4) einen elektromagnetischen Antrieb (18, 63) besitzt, der die Platte (D) zwischen einer Stirnöffnung eines Außengehäuses des Plattenspielers und einer Stellung oberhalb des Plattentellers (23) horizontal und zwischen der Stellung und dem Plattenteller (23) vertikal führt.

5. Optischer Plattenspieler gemäß jedem der bisherigen Ansprüche, wobei die Verriegelungseinricbtung (68, 70; 77, 79) mit Hilfe einer elektromagnetischen Einrichtung (73) in einen Verriegelungszustand gebracht wird die in Abhängigkeit von einem Signal in Betrieb gesetzt wird das ein Laden oder Entladen der Platte (D) oder einen Zugriff zur Platte (D) kennzeichnet.

6. Optischer Plattenspieler gemäß jedem der bisherigen Ansprüche, wobei der Plattenspieler für eine Verwendung in einem Auto aufgebaut ist.

FIG.1

# FIG. 2

# FIG.3

# FIG.6

FIG.4

4

FIG.5

# FIG.7

# FIG.8

# FIG.9

# FIG. 10

# FIG.11a

# FIG.11b

# FIG. 12a

# FIG. 12b

# FIG.13

ACCESS ENABLING SIGNAL

ACCESS COMPLETION SIGNAL